# EUROPEAN PATENT APPLICATION

(11) **EP 2 881 254 A1**
(43) Date of publication of application: **10.06.2015**
(21) Application number: 13825276.2
(22) Date of filing: 02.08.2013
(51) Int. Cl.: B32B 27/32, B05D 7/04, B05D 7/24, B32B 27/00, B32B 27/18, B32B 27/40, C08J 7/04, C08K 5/053, C08K 5/3492, C08K 5/353, C08L 23/26, C08L 75/04, C09J 175/04

(54) **MULTILAYER FILM, METHOD FOR PRODUCING SAME, AND AQUEOUS DISPERSION USED FOR PRODUCTION OF SAME**

(30) Priority: 02.08.2012 JP 2012171546
(71) Applicant: Unitika, Ltd., Amagasaki-shi, Hyogo 660-0824 (JP)
(72) Inventor: NAKAHARA, Jun-ichi, Kyoto 611-0021 (JP)
(74) Representative: Vigand, Philippe
(86) International application number: PCT/JP2013/070971
(87) International publication number: WO 2014/021445

(57) **Abstract**

Disclosed is a multilayer film including a resin layer formed at least on one surface of a biaxially stretched film, the resin layer including an acid-modified polyolefin resin (A), a polyurethane resin (B), a cross-linking agent (C) and an acetylene glycol-based surfactant (D), wherein the cross-linking agent (C) includes a melamine-based cross-linking agent (C1) and/or an oxazoline-based cross-linking agent (C2); the mass ratio ((A)/(B)) between (A) and (B) is 60/40 to 97/3; and the total amount of (C1) and (C2) is 1 to 20 parts by mass, or the amount of (C1) as a single substance and the amount of (C2) as a single substance are each 1 to 20 parts by mass, and the amount of (D) is 5 to 50 parts by mass in relation to 100 parts by mass of the total amount of (A) and (B).

## Description

### Technical Field

The present invention relates to a multilayer film including a resin layer formed at least on one surface of a biaxially stretched film wherein the resin layer contains an acid-modified polyolefin resin, a polyurethane resin, a cross-linking agent and an acetylene glycol-based surfactant.

### Background Art

A polyamide biaxially stretched film typified by poly caproamide (nylon 6, N6) film and a polyester biaxially stretched film typified by polyethylene terephthalate (PET) film are used in a wide range of applications because of excellent mechanical properties, heat resistance, pin-hole resistance and chemical resistance thereof.

For example, when these biaxially stretched films are used in packaging applications, heat sealing resins such as polyethylene (PE), polypropylene (PP) and ethylene-vinyl acetate copolymer (EVA) are often laminated on one surface or both surfaces of a biaxially stretched film to provide heat sealing to the biaxially stretched film, and thus various packaging forms are provided.

These biaxially stretched films are laminated on sealing materials such as an ethylene-vinyl acetate copolymer (EVA) sheet, and are also used in the application to back sheets for solar cells.

When such olefin-based resins such as PE, PP and EVA are laminated on a biaxially stretched film, (1) a method (dry lamination method) in which an olefin-based resin film is laminated on a biaxially stretched film by using an adhesive, and (2) a method (extrusion lamination method) in which a molten olefin-based resin is extruded on a biaxially stretched film and then cooled and solidified so as to laminate the olefin-based resin on the biaxially stretched film are generally used. Examples of the latter method include: a method in which the same type or different type of olefin-based resin is further extruded in between a biaxially stretched film and an olefin-based resin layer and lamination is performed while the biaxially stretched film and the olefin-based resin layer are being bonded to each other; and a method in which an olefin-based resin is extruded and laminated in two stages on a biaxially stretched film.

The extrusion lamination method of (2) enables the lamination of an olefin-based resin in a film shape on a biaxially stretched film under the conditions that the olefin-based resin film is not used, and the starting material of the olefin-based resin film is directly extruded on the biaxially stretched film, hence is loser in cost as compared with the dry lamination method of (1), and accordingly is adopted in increasing number of cases. Also in the extrusion lamination method, a biaxially stretched film made of a polyamide or a polyester and an olefin-based resin are intrinsically poor in adhesiveness, and hence an adhesive layer is generally provided in between both layers. In this case, as the adhesive, adhesives prepared by dissolving, for example, organic titanate-based, organic isocyanate-based and polyethylene imine-based adhesive compounds generally in organic solvents are used. However, the use of organic solvents involves the degradation of the work environment and the danger of fire, recently the concern about environmental issues has been growing, and hence methods avoiding the use of organic solvents have been demanded.

Although an adhesive using no organic solvent (non-solvent adhesive) is sometimes used, such a non-solvent adhesive is generally poorer in adhesive force as compared with a solvent-type adhesive, the wettability of such an adhesive is unsatisfactory when applied to a film, and thus a non-solvent adhesive is used in restricted applications.

From such a viewpoint as described above, there have been demanded techniques such as a technique for extrusion lamination of an olefin-based resin on a biaxially stretched film without using any adhesive, or a technique for laminating an olefin-based resin film without using any adhesive.

Patent Literature 1 discloses a lamination of a resin layer containing a melamine-based cross-linking agent on a biaxially stretched film in order to impart to the biaxially stretched film a performance of easy adhesion to an olefin-based resin layer. However, recently, needs for higher performances have been enhanced, and a higher performance of easy adhesion has been demanded.

Patent Literature 2 proposes a method in which an olefin-based resin is extruded into a film shape, the surface of the resulting olefin-based resin film is subjected to ozone treatment, then the olefin-based resin film is press-bonded to the activation treated surface of a thermoplastic resin film, and thus the adhesiveness to the thermoplastic resin film is developed. However, this method requires introduction of a specific apparatus for implementation thereof.

Patent Literature 3 and Patent Literature 4 describe adhesives containing an acid-modified polyolefin resin and a polyurethane resin, and disclose the extrusion lamination of an olefin-based resin through the intermediary of these adhesives and bonding of various substrate films through the intermediary of these adhesives. The adhesives described in these documents are intended to be used in such a way that a counterpart member is laminated immediately after the application of these adhesives to a substrate film; and hence, when two sheets of substrate films each applied with the adhesive are superposed on each other so as for the applied surface of one sheet and the unapplied surface of the other sheet to be brought into contact with each other, blocking tends to occur. Accordingly, it is impossible to in-line produce a film applied with such an adhesive. The resin layer formed of such an adhesive is sometimes poor in solvent resistance; and unfortunately, a laminate film obtained by extruding an olefin-based resin on the resin layer concerned is sometimes poor in content resistance when the laminate film is used in packaging application.

### Citation List

### Patent Literature

Patent Literature 1: JP2004-148729A
Patent Literature 2: JP2001-246660A
Patent Literature 3: JP2008-229971A
Patent Literature 4: JP2009-286920A

### Summary of Invention

### Technical Problem

In relation to such problems as described above, the present invention intends to provide a multilayer film which has a resin layer excellent in solvent resistance on a biaxially stretched film, is a multilayer film capable of attaining a satisfactory content resistance and a satisfactory adhesive force even when an olefin-based resin is laminated by an extrusion lamination method on the resin layer or an olefin-based resin film is laminated on the resin layer, and can be produced even by an in-line method.

### Solution to Problem

The present inventors made a diligent study in order to solve the above-described problems, and consequently have reached the present invention by discovering that the above-described problems can be solved by laminating on a biaxially stretched film a resin layer including an acid-modified polyolefin resin, a polyurethane resin, a specific cross-linking agent and a specific surfactant.

Specifically, the gist of the present invention is as follows.
(1) A multilayer film including a resin layer formed at least on one surface of a biaxially stretched film, the resin layer including an acid-modified polyolefin resin (A), a polyurethane resin (B), a cross-linking agent (C) and an acetylene glycol-based surfactant (D), wherein the cross-linking agent (C) includes a melamine-based cross-linking agent (C1) and/or an oxazoline-based cross-linking agent (C2); the mass ratio ((A)/(B)) between (A) and (B) is 60/40 to 97/3; and the total amount of (C1) and (C2) is 1 to 20 parts by mass, or the amount of (C1) as a single substance and the amount of (C2) as a single substance are each 1 to 20 parts by mass, and the amount of (D) is 5 to 50 parts by mass in relation to 100 parts by mass of the total amount of (A) and (B).
(2) The multilayer film according to (1), wherein the melt flow rate (MFR) of the acid-modified polyolefin resin (A) at 190°C, under a load of 2160 g is 0.01 to 100 g/10 min.
(3) The multilayer film according to (1) or (2), wherein an olefin-based resin layer is laminated on the surface of the resin layer.
(4) An aqueous dispersion including the acid-modified polyolefin resin (A), the polyurethane resin (B), the cross-linking agent (C) and the acetylene glycol-based surfactant (D), wherein the cross-linking agent (C) includes the melamine-based cross-linking agent (C1) and/or the oxazoline-based cross-linking agent (C2); the mass ratio ((A)/(B)) between (A) and (B) is 60/40 to 97/3; the total amount of (C1) and (C2) is 1 to 20 parts by mass, or the amount of (C1) as a single substance and the amount of (C2) as a single substance are each 1 to 20 parts by mass, and the amount of (D) is 5 to 50 parts by mass in relation to 100 parts by mass of the total amount of (A) and (B); and the concentration of (D) in the aqueous dispersion is 1 to 5% by mass.
(5) A method for producing the multilayer film according to (1) or (2), wherein the aqueous dispersion according to (4) is applied to at least one surface of the biaxially stretched film and dried.
(6) The method for producing the multilayer film according to (1) or (2), wherein the aqueous dispersion according to (4) is applied to at least one surface of an unstretched film or a uniaxially stretched film, and then the unstretched film or the uniaxially stretched film is dried and stretched.

### Advantageous Effects of Invention

The resin layer formed in the multilayer film of the present invention is excellent in solvent resistance, also excellent in the adhesiveness to the olefin-based resin such as polyethylene, polypropylene and ethylene-vinyl acetate copolymer, and hence is capable of forming a heat seal layer having practically sufficient laminate strength without using a solvent-type adhesive or an adhesive being non-solvent type but having weak adhesive force, for example, at the time of extrusion lamination; and the packaging body obtained from the multilayer film is excellent in content resistance. The multilayer film of the present invention allows an olefin-based resin film to be laminated, and has a practically sufficient laminate strength. The multilayer film of the present invention is excellent in blocking resistance and accordingly can be produced by an in-line method.

The multilayer film of the present invention is capable of attaining suitable printing properties in a printing method including a thermal transfer step, in particular without using a primer. For example, the multilayer film of the present invention can be suitably used in, for example, an on-demand printing performed by a digital offset method.

### Description of Embodiments

Hereinafter, the present invention is described in detail.

The multilayer film of the present invention is a multilayer film including a resin layer formed at least on one surface of a biaxially stretched film, the resin layer including an acid-modified polyolefin resin (A), a polyurethane resin (B), a cross-linking agent (C) and an acetylene glycol-based surfactant (D). Hereinafter, the biaxially stretched film is sometimes referred to as the "substrate film."

### (Biaxially Stretched Film)

In the present invention, various thermoplastic resins can be used as the resin constituting the biaxially stretched film; examples among the various thermoplastic resins include: polyester-based resins such as polyethylene terephthalate (PET), polybutylene terephthalate, polyethylene naphthalate, polybutylene naphthalate, and mixtures of these; or polyamide-based resins such as polycaproamide (nylon 6, N6), polyhexamethylene adipamide (nylon 66), poly-p-xylylene adipamide (MXD6 nylon), and mixtures of these.

The polyester films and the polyamide films constituted with these resins are excellent in moldability, workability, mechanical properties, gas barrier property and the like, and have excellent performances as packaging materials. As the substrate film, the multilayer bodies including polyester or polyamide, or the multilayer bodies of films formed of other thermoplastic resins may also be used. The thickness of each of the films is not particularly limited, but is preferably within a range from 5 to 500 µm.

The biaxially stretched film can be produced with thermoplastic resins as starting materials by using conventional heretofore known methods. For example, the foregoing polyester resins and the foregoing polyamide resins are heated and melted in extruders, extruded from T-dies, and cooled and solidified on cooling rolls to yield unstretched films, or alternatively, extruded from circular dies and solidified by water cooling or air cooling to yield unstretched films. For the production of a stretched film, a method performing stretching, after an unstretched film is once wound or continuously, by a simultaneous biaxial stretching method or a successive biaxial stretching method is preferable. From the viewpoint of the mechanical properties and the thickness uniformity of the film, a method of a combination of a flat type film forming method using a T-die and a tenter stretching method is preferable.

### (Acid-Modified Polyolefin Resin)

The acid-modified polyolefin resin (A) used in the present invention is a resin obtained by acid-modifying a polyolefin with an unsaturated carboxylic acid component. As the acid-modified polyolefin resin (A), a resin composed of the following three components is most preferable: an unsaturated carboxylic acid or an anhydride thereof (A1), an olefin compound (A2) and an alkyl ester of acrylic acid or methacrylic acid (A3).

Examples of the component (A1) include (meth)acrylic acid, maleic acid, itaconic acid, fumaric acid and crotonic acid. The unsaturated carboxylic acid may be in a form of a derivative thereof such as a salt, an acid anhydride, a half ester or a half amide. Among these, acrylic acid, methacrylic acid, maleic acid and maleic anhydride are preferable, and in particular, acrylic acid and maleic anhydride are preferable. The unsaturated carboxylic acid is only required to be copolymerized in the polyolefin resin without being limited with respect to the form of the copolymerization; examples of the copolymerization form include random copolymerization, block copolymerization and graft copolymerization. The maleic acid unit in the polyolefin resin including the maleic anhydride unit tends to take, in a dry condition, a maleic anhydride structure with the adjacent carboxyl groups dehydrated to form a ring, and on the other hand, tends to take a structure of maleic acid or a salt thereof, in the below-described aqueous medium including a basic compound, as a result of partial or complete ring opening.

Examples of the component (A2) include olefins having 2 to 6 carbon atoms such as ethylene, propylene, isobutylene, 1-butene, 1-pentene and 1-hexene; mixtures of these may also be used. Among these, the olefins having 2 to 4 carbon atoms such as ethylene, propylene, isobutylene and 1-butene are more preferable, and in particular, ethylene is preferable.

Specific examples of the component (A3) include lower alkyl esters of (meth)acrylic acid such as methyl acrylate, ethyl acrylate, methyl methacrylate and ethyl methacrylate; methyl acrylate and ethyl acrylate are preferable.

As the acid-modified polyolefin resins having the components (A1) to (A3) as described above, the ternary copolymer composed of ethylene, methyl acrylate or ethyl acrylate, and maleic anhydride is most preferable.

When an acid-modified polyolefin resin constituted with (A1) to (A3), the component (A1) is included, in relation to the total amount of the resin, in a content of 0.01% by mass or more and less than 5% by mass, more preferably in a content of 0.1% by mass or more and less than 5% by mass, furthermore preferably in a content of 0.5% by mass or more and less than 5% by mass and most preferably in a content of 1 to 4% by mass. When the content of the component (A1) is less than 0.01% by mass, the below-described preparation of an aqueous dispersion of the acid-modified polyolefin resin comes to be difficult, thus, it is difficult to obtain a satisfactory aqueous dispersion, and from the viewpoint of alkali resistance or the adhesiveness to a polyester-based substrate film, the content of the component (A1) is preferably set to be less than 5% by mass.

From the viewpoint of the easiness in preparing an aqueous dispersion of the polyolefin resin and the improvement of the performances such as water resistance, the mass ratio ((A2)/(A3)) between (A2) and (A3) is preferably set at 55/45 to 99/1, and in order to acquire satisfactory adhesiveness, the mass ratio is preferably 60/40 to 98/2 and particularly preferably 75/25 to 95/5. The component (A3) such as the acrylic acid ester unit sometimes changes into the component (A1) such as the acrylic acid unit as a result of the hydrolysis of an extremely small fraction of the ester bonds in the below-described preparation of the aqueous dispersion of the resin; however, in such a case, the ratio between the individual components taking into account such changes may fall within the above-described ranges.

In the acid-modified polyolefin resin (A) used in the present invention, other monomers may also be copolymerized in a content of 20% by mass or less of the whole resin. Examples of such other monomers include: alkyl vinyl ethers having 3 to 30 carbon atoms such as methyl vinyl ether and ethyl vinyl ether; dienes; (meth)acrylonitrile; halogenated vinyls; halogenated vinylidenes; carbon monoxide; and sulfur dioxide.

In the acid-modified polyolefin resin (A) used in the present invention, the melt flow rate (MFR) at 190°C, under a load of 2160 g to offer a guideline for molecular weight is preferably 0.01 to 100 g/10 min, more preferably 1 to 50 g/10 min and furthermore preferably 2 to 30 g/10 min. When the MFR is less than 0.01 g/10 min, the preparation of an aqueous dispersion of the resin is difficult, and on the other hand, when the MFR exceeds 100 g/10 min, the resin layer is hard and brittle, thus the mechanical properties and the workability of the resin layer tend to be degraded, and the resin layer is sometimes poor in blocking resistance.

The method for synthesizing the acid-modified polyolefin resin (A) is not particularly limited; however, in general, the acid-modified polyolefin resin (A) is obtained by high-pressure radical copolymerization of the monomers to constitute the polyolefin resin in the presence of a radical generator. The unsaturated carboxylic acid or the anhydride thereof may also be graft copolymerized (graft modification).

### (Polyurethane Resin)

The polyurethane resin (B) used in the present invention is a polymer including the urethane bonds in the main chain thereof, which is a product obtained by a reaction between, for example, a polyol compound and a polyisocyanate compound. In the present invention, the structure of the polyurethane resin is not particularly limited; however, from the viewpoint of boiling resistance, the glass transition temperature of the polyurethane resin is preferably 0°C or higher, and from the viewpoint of blocking resistance, the glass transition temperature of the polyurethane resin is preferably 30°C or higher, more preferably 50°C or higher and particularly preferably 60°C or higher.

Examples of the polyol component constituting the polyurethane resin include, without being particularly limited to: low molecular weight glycols such as ethylene glycol, diethylene glycol, triethylene glycol, 1,3-butanediol, 1,4-butanediol, 1,2-propanediol, 1,3-propanediol, 1,6-hexanediol, neopentyl glycol, 1,4-cyclohexanedimethanol, methyl-1,5-pentanediol, 1,8-octanediol, 2-ethyl-1,3-hexanediol and dipropylene glycol; low molecular weight polyols such as trimethylolpropane, glycerin and pentaerythritol; polyol compounds having ethylene oxide units or propylene oxide units; high molecular weight diols such as polyether diols and polyester diols; bisphenols such as bisphenol A and bisphenol F; and dimer diol obtained by converting the carboxyl groups of dimer acid into hydroxyl groups.

As the polyisocyanate component, it is possible to use one of or mixtures composed of two or more of heretofore known aromatic, aliphatic and alicyclic diisocyanates. Specific examples of the diisocyanates include: tolylene diisocyanate, 4,4'-diphenylmethane diisocyanate, 1,3-phenylene diisocyanate, hexamethylene diisocyanate, xylylene diisocyanate, 1,5-naphthylene diisocyanate, isophorone diisocyanate, dimeryl diisocyanate, lysine diisocyanate, hydrogenated 4,4'-diphenylmethane diisocyanate, hydrogenated tolylene diisocyanate, dimer diisocyanate obtained by converting carboxyl groups of dimeric acid into isocyanate groups, and adducts, biurets and isocyanurates of these diisocyanate compounds. For the diisocyanates, tri- or higher-functional polyisocyanates such as triphenylmethane triisocyanate, polymethylene polyphenyl isocyanate may also be used.

The polyurethane resin (B) used in the present invention preferably has anionic groups from the viewpoint of the dispersibility into an aqueous medium. The anionic group as referred to herein means a functional group to be an anion in an aqueous medium; examples of such functional groups include a carboxyl group, a sulfonate group, a sulfate group and a phosphate group. The polyurethane resin (B) preferably has a carboxyl group(s), among these groups.

For the purpose of introducing anionic groups into the polyurethane resin, a polyol component having a carboxyl groups, sulfonate groups, sulfate groups, phosphate groups and the like may be used; examples of the polyol compound having carboxyl groups include: 3,5-dihydroxybenzoic acid, 2,2-bis(hydroxymethyl)propionic acid, 2,2-bis(hydroxyethyl)propionic acid, 2,2-bis(hydroxypropyl)propionic acid, bis(hydroxymethyl)acetic acid, bis(4-hydroxyphenyl)acetic acid, 2,2-bis(4-hydroxyphenyl)pentanoic acid, tartaric acid, N,N-dihydroxyethylglycine and N,N-bis(2-hydroxyethyl)-3-carboxyl-propionamide.

The molecular weight of the polyurethane resin can also be appropriately regulated by using a chain extender. Examples of such a compound include those compounds each having two or more active hydrogen atoms of amino groups and hydroxyl groups, capable of reacting with isocyanate groups; for example, as such compounds, diamine compounds, dihydrazide compounds and glycols can be used. Examples of the diamine compound include: ethylenediamine, propylenediamine, hexamethylenediamine, triethyltetramine, diethylenetriamine, isophoronediamine and dicyclohexylmethane-4,4'-diamine. Additionally, examples of the diamine compound also include: hydroxyl group-containing diamines such as N-2-hydroxyethylethylenediamine and N-3-hydroxypropylethylenediamine; and dimer diamine obtained by converting the carboxyl groups of dimeric acid into amino groups. Moreover, examples of the diamine compound also include: diamine-type amino acids such as glutamine, asparagine, lysine, diaminopropionic acid, ornithine, diaminobenzoic acid and diaminobenzenesulfonic acid. Examples of the dihydrazide compound include: saturated aliphatic dihydrazides having 2 to 18 carbon atoms such as oxalic acid dihydrazide, malonic acid dihydrazide, succinic acid dihydrazide, glutaric acid dihydrazide, adipic acid dihydrazide and sebacic acid dihydrazide; unsaturated dihydrazides such as maleic acid dihydrazide, fumaric acid dihydrazide, itaconic acid dihydrazide and phthalic acid dihydrazide; and carbonic acid dihydrazide, carbodihydrazide and thiocarbodihydrazide. As the glycols, glycols appropriately selected from the forgoing polyols can be used.

Examples of the polyurethane resin (B) used in the present invention include: an ionomer-type self-emulsifying polyurethane resin, and an ionomer-type self-emulsifying polyurethane-polyurea resin. For the purpose of enhancing the solvent resistance, it is preferable to use an aromatic component in at least one of both components. For the purpose of enhancing the adhesiveness, it is preferable to use a polymer in which a hydroxyl group, a carboxyl group or an amino group is introduced into the polymer main chain or in the polymer terminal.

### (Melamine-Based Cross-Linking Agent)

The melamine-based cross-linking agent (C1) used in the present invention is a generic name for the compounds obtained by applying various modifications to the amino groups of a compound with amino groups respectively bonded to the three carbon atoms in a triazine ring, namely, the amino groups of melamine [1,3,5-triazine-2,4,6-triamine], and also includes the cases where two or more triazine rings are condensed among themselves. The type of the modification is such that some of the hydrogen atoms of the three amino groups are alkylated or methylolated. In general, as compared with the alkylated case, the methylolated case or the case of unsubstituted are hydrogen atoms is higher in reactivity, and appropriate types of melamine compounds can be selected according to the intended applications. Preferable among these are the compounds in which the number of condensation of the triazine rings is three or less, and at least one of the amino groups is substituted with a methylol group, and such compounds are excellent in the dispersibility in aqueous media and the reactivity with resins.

### (Oxazoline-Based Cross-Linking Agent)

The oxazoline-based cross-linking agent (C2) used in the present invention may be any cross-linking agent having two or more oxazoline groups in the molecule thereof, without being particularly limited. Examples of the oxazoline-based cross-linking agent (C2) include: cross-linking agents having oxazoline groups such as 2,2'-bis(2-oxazoline), 2,2'-ethylene-bis (4,4'-dimethyl-2-oxazoline), 2,2'-p-phenylene-bis(2-oxazoline) and bis(2-oxazolinylcyclohexane) sulfide; and oxazoline group-containing polymers. These can be used each alone or in combinations of two or more thereof. Among these, because of being easy in handling, oxazoline group-containing polymers are preferable. The oxazoline group-containing polymers can be obtained by polymerizing the addition polymerizable oxazolines such as 2-vinyl-2-oxazoline, 2-vinyl-4-methyl-2-oxazoline and 2-isopropenyl-2-oxazoline. If necessary, other monomers may also be copolymerized. The method for polymerizing oxazoline group-containing polymers is not particularly limited, and as such a method, various heretofore known polymerization methods can be adopted. The cross-linking agent (C2) is characterized by being satisfactory in adhesiveness with polyester. The cross-linking agent (C2) is also suitable for the application to aqueous material.

### (Acetylene Glycol-Based Surfactant)

The acetylene glycol-based surfactant (D) used in the present invention is a surfactant having an acetylene group in the center thereof and being a nonionic surfactant derived from an acetylene glycol having a bilaterally symmetric structure, and is used in the application to aqueous materials particularly as a wetting agent excellent in defoaming property. In the present invention, the acetylene glycol-based surfactant (D) is added to the resin layer including the acid-modified polyolefin resin (A), the polyurethane resin (B) and the cross-linking agent (C). By adding (D) to the resin layer, the laminate film obtained by extruding a heat sealing resin on the resin layer can be made to be further excellent in content resistance.

### (Resin Layer)

The composition of the resin layer laminated on the biaxially stretched film is preferably such that the mass ratio ((A)/(B)) between the acid-modified polyolefin resin (A) and the polyurethane resin (B) is required to be 60/40 to 97/3, and is preferably 70/30 to 85/15. When the content of the acid-modified polyolefin resin (A) is less than 60% by mass, the intended adhesiveness to the olefin-based resin is not sufficiently obtained, and when the content of the acid-modified polyolefin resin (A) exceeds 97% by mass, the adhesiveness to the biaxially stretched film is insufficient and no desirable laminate strength is obtained.

With respect to the melamine-based cross-linking agent (C1) and/or the oxazoline-based cross-linking agent (C2) included as the cross-linking agent (C), the total parts by mass of (C1) and (C2) when (C1) and (C2) are used in combination, or the parts by mass of (C1) or (C2) when (C1) or (C2) is used as a single substance is required to be 1 to 20 parts by mass and is preferably 2 to 10 parts by mass in relation to 100 parts by mass of the total amount of (A) and (B). When the above-described amount is less than 1 part by mass, the resin layer is poor in solvent resistance and content resistance, and is sometimes poor in blocking resistance. On the other hand, when the above-described amount exceeds 20 parts by mass, the cross-linking agent (C) exerts hardening effect to make the resin layer brittle and to degrade the laminate strength.

The amount of the acetylene glycol-based surfactant (D) is required to be 5 to 50 parts by mass and is preferably 10 to 30 parts by mass in relation to 100 parts by mass of the total amount of (A) and (B). When the amount of the acetylene glycol-based surfactant (D) is less than 5 parts by mass, the improvement effect of the content resistance is insufficient, and when the amount of the acetylene glycol-based surfactant (D) exceeds 50 parts by mass, the content resistance is degraded, and at the same time, the solvent resistance, the blocking resistance and the laminate strength are also degraded.

To the resin layer, various heretofore known additives such as an antistatic agent and a slipping agent can be added, if necessary, within a range not affecting the adhesiveness or the performances of the resin layer.

The thickness of the resin layer formed on the biaxially stretched film is preferably 0.03 to 10 µm and more preferably 0.05 to 0.2 µm. When the thickness of the resin layer is thinner than 0.03 µm, no sufficient adhesiveness is sometimes obtained, and even when the thickness of the resin layer is made to be thicker than 10 µm, the performances of the resin layer are saturated, and hence the formation of the thickness equal to or thicker than 10 µm is not economical. When the thickness of the resin layer is thinner than 0.2 µm, the multilayer film comes to be advantageous with respect to the blocking resistance.

### (Aqueous Dispersion)

In the present invention, as the method for forming the resin layer on the biaxially stretched film, a method is quoted in which an aqueous dispersion including the acid-modified olefin resin (A), the polyurethane resin (B), the cross-linking agent (C) and the acetylene glycol-based surfactant (D) is applied to the film and then dried. The aqueous dispersion for forming the resin layer, used in the present invention is preferably has a practically sufficient stability in a form of a coating liquid in which the individual components are mixed together. The practically sufficient stability as referred to herein means the state in which when the coating liquid is stored at room temperature or a predetermined temperature, the uniformity, the viscosity and the performances of the coating liquid are not changed over 6 hours or more preferably over 24 hours or more and more preferably over a few days or more. The aqueous dispersion as referred to in the present invention is an aqueous system in which the resin is dispersed or dissolved in an aqueous medium, and the aqueous medium as referred to herein means a liquid including water as the main component thereof, and including, if necessary, a below described water-soluble organic solvent or a water-soluble basic compound.

The composition of the acid-modified polyolefin resin (A), the polyurethane resin (B), the cross-linking agent (C) and the acetylene glycol-based surfactant (D) in the aqueous dispersion may be any composition capable of forming the above-described resin layer; the mass ratio ((A)/(B)) between the acid-modified polyolefin resin (A) and the polyurethane resin (B) is required to be 60/40 to 97/3 and is preferably 70/30 to 85/15.

With respect to the cross-linking agent (C), the total amount of (C1) and (C2) is required to be 1 to 20 parts by mass and is preferably 2 to 10 parts by mass, or the amount of (C1) as a single substance and the amount of (C2) as a single substance are each required to be 1 to 20 parts by mass and are each preferably 2 to 10 parts by mass in relation to 100 parts by mass of the total amount of (A) and (B).

The amount of the acetylene glycol-based surfactant (D) is required to be 5 to 50 parts by mass and is preferably 10 to 30 parts by mass in relation to 100 parts by mass of the total amount of (A) and (B). The concentration of (D) in the aqueous dispersion is required to be 1 to 5% by mass. When the concentration of (D) in the aqueous dispersion is less than 1% by mass, the aqueous dispersion is not sufficient in the wettability thereof as a coating liquid, and hence the aqueous dispersion cannot be applied uniformly, and no sufficient laminate strength is obtained. When the concentration of the acetylene glycol-based surfactant (D) exceeds 5% by mass, (D) functions as a plasticizer in the resulting resin layer, and hence the physical strength of the resin layer is degraded, and the adhesiveness of the resin layer is also degraded.

The aqueous dispersion for forming the resin layer can be prepared by mixing the acid-modified polyolefin resin (A), the polyurethane resin (B), the cross-linking agent (C), the acetylene glycol-based surfactant (D) and an aqueous medium in predetermined amounts in an appropriate vessel.

(Aqueous Dispersion of Acid-Modified Polyolefin Resin (A))

In the present invention, in order to prepare the aqueous dispersion for forming the resin layer, a beforehand prepared aqueous dispersion of the acid-modified polyolefin resin (A) may be used. In order to obtain the aqueous dispersion of the acid-modified polyolefin resin (A), for example, there can be used a method in which the acid-modified polyolefin resin (A) and water are heated and stirred, if necessary, together with a basic compound or an organic solvent, in a hermetically sealable vessel.

In this case, the addition of the basic compound is preferable because the basic compound neutralizes the carboxyl groups of the acid-modified polyolefin resin (A) and the electrostatic repulsive force between the produced anions prevents the aggregation of fine particles to impart stability to the aqueous dispersion. The addition amount of the basic compound is preferably 0.5 to 3.0 times, more preferably 0.8 to 2.5 times and particularly preferably 1.0 to 2.0 times the number of equivalents of the carboxyl groups in the acid-modified polyolefin resin (A). When the addition amount is less than 0.5 times the number of equivalents, the addition effect of the basic compound is not found, and when the addition amount exceeds 3.0 times the number of equivalents, the drying time at the time of forming the resin layer is sometimes extended, or the aqueous dispersion is sometimes colored.

Specific examples of the basic compound include: metal hydroxides such as LiOH, KOH and NaOH; ammonia; or organic amine compounds. Among these, it is preferable to use a compound being volatilized at the time of forming the resin layer from the viewpoint of the production process of the multilayer film; thus, ammonia or an organic amine compound having a boiling point of 250°C or lower. Specific examples of such an organic amine compound may include: triethylamine, N,N-dimethylethanolamine, aminoethanolamine, N-methyl-N,N-diethanolamine, isopropylamine, iminobispropylamine, ethylamine, diethylamine, 3-ethoxypropylamine, 3-diethylaminopropylamine, sec-butylamine, propylamine, methylaminopropylamine, methyliminobispropylamine, 3-methoxypropylamine, monoethanolamine, diethanolamine, triethanolamine, morpholine, N-methylmorpholine and N-ethylmorpholine.

In the production of the aqueous dispersion of the acid-modified polyolefin resin (A), it is preferable to add an organic solvent when the molecular weight of the resin is large to some degree. The addition amount of the organic solvent used in this case is preferably 1 to 40 parts by mass, more preferably 2 to 30 parts by mass and particularly preferably 3 to 20 parts by mass in relation to 100 parts by mass of the aqueous dispersion. The aqueous dispersion of the acid-modified polyolefin resin (A), produced by adding an organic solvent can be reduced in the content of the organic solvent by being heated under stirring under normal or reduced pressure (stripping) to result in an content of the organic solvent of approximately 0.01% by mass.

As the organic solvent, an organic solvent having a solubility in water of 5 g/L or more at 20°C is preferably used, and an organic solvent having a solubility in water of 10 g/L or more at 20°C is more preferably used. Specific examples of such an organic solvent include: alcohol such as methanol, ethanol, n-propanol, isopropanol, n-butanol, isobutanol, sec-butanol, tert-butanol, n-amyl alcohol, isoamyl alcohol, sec-amyl alcohol, tert-amyl alcohol, 1-ethyl-1-propanol, 2-methyl-1-butanol, n-hexanol and cyclohexanol; ketones such as methyl ethyl ketone, methyl isobutyl ketone, ethyl butyl ketone, cyclohexanone and isophorone; ethers such as tetrahydrofuran and dioxane; esters such as ethyl acetate, n-propyl acetate, isopropyl acetate, n-butyl acetate, isobutyl acetate, sec-butyl acetate, 3-methoxybutyl acetate, methyl propionate, ethyl propionate, diethyl carbonate and dimethyl carbonate; glycol derivatives such as ethylene glycol, ethylene glycol monomethyl ether, ethylene glycol monoethyl ether, ethylene glycol monopropyl ether, ethylene glycol monobutyl ether, ethylene glycol ethyl ether acetate, diethylene glycol, diethylene glycol monomethyl ether, diethylene glycol monoethyl ether, diethylene glycol monobutyl ether, diethylene glycol ethyl ether acetate, propylene glycol, propylene glycol monomethyl ether, propylene glycol monobutyl ether, propylene glycol methyl ether acetate; and 3-methoxy-3-methyl butanol, 3-methoxy butanol, acetonitrile, dimethylformamide, dimethylacetamide, diacetone alcohol and ethyl acetoacetate. Among these, from the viewpoint of the easiness in preparing the aqueous dispersion of the resin and the easiness in removing the organic solvent from the aqueous medium, ethanol, n-propanol, isopropanol, n-butanol, methyl ethyl ketone, cyclohexanone, tetrahydrofuran, dioxane, ethylene glycol monoethyl ether, ethylene glycol monopropyl ether, ethylene glycol monobutyl ether are preferable; isopropanol is particularly preferable from the viewpoint of low temperature drying property.

According to such a production method as described above, an aqueous dispersion can be obtained without adding any emulsifier component or a compound having protective colloid effect generally used in the production of an aqueous dispersion. In order to further facilitate the dispersion of the resin in the aqueous medium, an emulsifier or a compound having protective colloid effect may also be added in the reaction system. However, these compounds are generally nonvolatile, accordingly remain also in the resin layer of the multilayer film, have the effect to plasticize the resin layer, and thus degrade the water resistance or the chemical resistance. In the case where the water resistance is degraded, for example, when a moisture-containing content is packaged by using the multilayer film, the degradation of the water resistance possibly may offer a cause for breaking of the packaging bag. In the case where the chemical resistance is degraded, when printing is applied to the surface of the film, the solvent of the ink attacks the surface of the film, and thus the degradation of the performances and the degradation of the printing quality tend to occur. Accordingly, the use of an emulsifier or a compound having protective colloid effect is recommended to be limited to as small an amount as possible.

Examples of the emulsifier as referred to in the present invention include a cationic emulsifier, an anionic emulsifier, a nonionic emulsifier, or an amphoteric emulsifier, and also include emulsifiers generally used for emulsion polymerization, and additionally, surfactants. Examples of the anionic emulsifier include: a higher alcohol sulfate ester salt, a higher alkylsulfonate salt, a higher carboxylate salt, an alkylbenzenesulfonate salt, a polyoxyethylenealkylsulfate salt, polyoxyethylene alkyl phenyl ether sulfate salt, vinyl sulfosuccinate. Examples of the nonionic emulsifier include: compounds having polyoxyethylene structure such as polyoxyethylene alkyl ether, polyoxyethylene alkyl phenyl ether, polyethylene glycol fatty acid ester, ethylene oxide-propylene oxide block copolymer, polyoxyethylene fatty acid amide and ethylene oxide-propylene oxide copolymer; and sorbitan derivatives. Examples of the amphoteric emulsifier include: lauryl betaine and lauryldimethylamine oxide.

Examples of the compound having protective colloid effect include the following compounds generally used as dispersion stabilizers for fine particles: polyvinyl alcohol, carboxyl group-modified polyvinyl alcohol, carboxymethyl cellulose, hydroxyethyl cellulose, hydroxypropyl cellulose, modified starch, polyvinylpyrrolidone, polyacrylic acid and salts thereof; acid-modified polyolefin waxes having number average molecular weights of usually 5000 or less such as carboxyl group-containing polyethylene wax, carboxyl group-containing polypropylene wax, and carboxyl group-containing polyethylene-propylene wax, and salts of these waxes; carboxyl group-containing polymers having unsaturated carboxylic acid contents of 10% by mass or more and salts thereof such as acrylic acid-maleic anhydride copolymer and salts thereof, styrene-(meth)acrylic acid copolymer, isobutylene-maleic anhydride alternating copolymer and (meth)acrylic acid-(meth)acrylic acid ester copolymer; polyitaconic acid and salts thereof, amino group-containing water-soluble acryl-based copolymer, gelatin, gum arabic and casein.

The apparatus for producing the aqueous dispersion may be any apparatus that has a vessel capable of holding liquid placed therein and can appropriately stir the mixture composed of the aqueous medium placed in the vessel and a resin powder or a granular resin. As such an apparatus, the apparatuses widely known to those skilled in the art as solid/liquid stirrers or emulsifiers can be used, and it is preferable to use apparatuses allowing pressurization at 0.1 MPa or more. The stirring method and the rotation speed of the stirring are not particularly limited. From the viewpoint of accelerating the rate of the preparation of the aqueous dispersion, it is preferable to use a starting material resin being granular or powdery and having a particle size of 1 cm or less and preferably 0.8 cm or less.

In the vessel of the apparatus, the above-described respective starting materials are placed, and stirred and mixed at a temperature of preferably 40°C or lower. Subsequently, while the temperature in the vessel is being maintained at 50 to 200°C, preferably 60 to 200°C, the resulting mixture is continuously stirred for preferably 5 to 120 minutes to sufficiently disperse the resin in the aqueous medium, then the dispersed mixture is preferably cooled under stirring to 40°C or lower, and thus an aqueous dispersion can be obtained. When the temperature in the vessel is lower than 50°C, it is difficult to prepare an aqueous dispersion of the resin. When the temperature in the vessel exceeds 200°C, the molecular weight of the polyolefin resin is possibly degraded.

The method for heating the inside of the vessel is preferably the method for heating the vessel from outside the vessel; for example, the inside of the vessel can be heated by using oil or water, or alternatively, by using a heater attached to the vessel. Examples of the method for cooling the inside of the vessel include: a method of allowing the inside of the vessel to stand for spontaneous cooling, and a method of cooling the inside of the vessel by using oil or water set at 0 to 40°C.

Subsequently, if necessary, jet pulverization treatment may also be performed. The jet pulverization treatment as referred to herein means a treatment for grain refining of the resin particles wherein an aqueous dispersion is jetted under a high pressure from a fine hole such as a nozzle or a slit, to make the resin particles collide with each other or collide with a collision plate or the like, thus mechanical energy makes the resin particles further fine; specific examples of the apparatus for the purpose of grain refining include; the Homogenizer manufactured by A. P. V. GAULIN Corp. and the Microfluidizer M-110E/H, manufactured by Mizuho Industrial Co., Ltd.

### (Mixing Method)

The aqueous dispersion for forming the resin layer can be prepared by mixing the aqueous dispersion of the acid-modified polyolefin resin (A), obtained by the above described method, and other components such as the polyurethane resin (B), the cross-linking agent (C) and the acetylene glycol-based surfactant (D) each in predetermined amounts in an appropriate vessel. The order of the placement of these ingredients in the vessel may be arbitrary, and all the ingredients may also be placed simultaneously.

### (Resin Layer Formation Method)

As described above, as the method for forming a multilayer film of the present invention, the method in which the aqueous dispersion for forming the resin layer including the acid-modified olefin resin (A), the polyurethane resin (B), the cross-linking agent (C) and the acetylene glycol-based surfactant (D) is applied to the biaxially stretched film is quoted as an example. When the aqueous dispersion for forming the resin layer is applied to the substrate film, after the aqueous dispersion is applied to the biaxially stretched film, drying and heat treatment may be applied; or alternatively, to an unstretched film before the completion of orientation or to a film after completion of uniaxial stretching, the aqueous dispersion is applied, stretched after drying or simultaneously with drying, and thus the orientation may be completed. The multilayer film of the present invention is excellent in blocking resistance, and hence can be produced by applying an in-line method in which the aqueous dispersion is applied to an unstretched film or a uniaxially stretched film to form the resin layer, and then the film is stretched.

The method for applying the aqueous dispersion for forming the resin layer is not particularly limited, and is selected from heretofore known methods. For example, the following methods can be adopted: a gravure roll method, a reverse roll method, an air knife method, a reverse gravure method, a Meyer bar method, an inverse roll method, or various coating methods as combinations of these methods, and various spraying methods. The wet tension of the substrate film can be regulated by installing a corona discharge apparatus before the coater.

### (Olefin-Based Resin)

The multilayer film of the present invention allows a layer formed of an olefin-based resin to be further laminated on the surface of the resin layer thereof, and can be used in packaging application by applying heat sealing to the laminated layer. The olefin-based resin may be polyolefins partially modified by copolymerization in addition to polyolefins such as polyethylene and polypropylene; examples of such a copolymer may include ethylene-vinyl acetate copolymer. Examples of the usable, commercially available olefin-based resins include: L211 manufactured by Sumitomo Chemical Co., Ltd. and SOLAR EVA SC50B manufactured by Mitsui Chemicals Fabro, Inc.

As the method for further laminating the layer formed of an olefin-based resin on the multilayer film of the present invention, heretofore known extrusion lamination methods, dry lamination methods, heat press methods and the like can be applied.

### Examples

Next, the present invention is specifically described on the basis of Examples. The starting materials and the method for preparing the aqueous dispersion of the acid-modified polyolefin resin are as follows.

(A) Acid-Modified Polyolefin Resins:
   (A-1) Bondine HX-8290 (ethylene/ethyl acrylate/maleic anhydride = 80/18/2(% by mass), MFR: 65 g/10 min, melting point: 81°C), manufactured by Arkema Co., Ltd.
   (A-2) Bondine TX-8030 (ethylene/ethyl acrylate/maleic anhydride 85/12/3 (% by mass), MFR: 3 g/10 min, melting point: 95°C), manufactured by Arkema Co., Ltd.
   (A-3) Bondine HX-8140 (ethylene/ethyl acrylate/maleic anhydride 78/19/3 (% by mass), MFR: 20 g/10 min, melting point: 80°C), manufactured by Arkema Co., Ltd.
   (A-4) Bondine HX-8210 (ethylene/ethyl acrylate/maleic anhydride = 90/7/3 (% by mass), MFR: 200 g/10 min, melting point: 100°C), manufactured by Arkema Co., Ltd.
(B) Polyurethane Resins:
   (B-1) Hydran WLA-404, manufactured by DIC Corp.
   (B-2) Elastron E-37, manufactured by Dai-ichi Kogyo Seiyaku Co., Ltd.
(C) Cross-Linking Agents
   (C1) Melamine-Based Cross-Linking Agents:
   (C1-1) Cymel 325, manufactured by Nihon Cytec Industries Inc.
   (C1-2) Beckamine APM, manufactured by DIC Corp.
   (C2) Oxazoline-Based Cross-Linking Agents:
   (C2-1) Epocros WS-700, manufactured by Nippon Shokubai Co., Ltd.
   (C2-2) Epocros WS-500, manufactured by Nippon Shokubai Co., Ltd.
   (C3) Carbodiimide-Based Cross-Linking Agent:
   (C3-1) Carbodilite V-02, manufactured by Nisshinbo Chemical Inc.
(D) Acetylene Glycol-Based Surfactants:
   (D-1) Olfine E1004, manufactured by Nissin Chemical Co., Ltd.
   (D-2) Acetylenol E00, manufactured by Kawaken Fine Chemicals Co., Ltd.

### Reference Example 1

### (Preparation of Acid-Modified Polyolefin Aqueous Dispersion (E-1))

By using a stirrer having a 1-liter volume, hermetically sealable pressure-resistant glass vessel equipped with a heater, 60.0 g of the acid-modified polyolefin resin (A-1), 90.0 g of isopropyl alcohol (manufactured by Wako Pure Chemical Industries, Ltd., hereinafter sometimes referred to as IPA), 3.0 g of N,N-dimethylethanolamine (manufactured by Wako Pure Chemical Industries, Ltd., hereinafter sometimes referred to as DMEA) and 147.0 g of distilled water were placed in the glass vessel. Then, the reaction system was stirred for 30 minutes by setting the rotation speed of stirring blades at 300 rpm while the temperature within the reaction system was being maintained at 140 to 145°C. Then, the reaction system was cooled down to room temperature (about 25°C) in a water bath under stirring at the unaltered rotation speed of 300 rpm, to prepare an acid-modified polyolefin resin aqueous dispersion. In a two-necked round-bottom flask, the acid-modified polyolefin resin aqueous dispersion and 180 g of distilled water were placed, then the flask was equipped with a mechanical stirrer and a Liebig condenser, and the flask was heated in an oil bath to distil off the aqueous medium. When about 180 g of water and IPA were distilled off, the heating was terminated and the flask was cooled to room temperature. After cooling, the liquid components in the flask were pressure-filtered (air pressure: 0.2 MPa), with a 300-mesh stainless steel filter (wire diameter: 0.035 mm, plain weave) to yield a milky white aqueous dispersion (E-1) of the acid-modified polyolefin resin (A-1).

### Reference Example 2

### (Preparation of Acid-Modified Polyolefin Aqueous Dispersion (E-2))

The aqueous dispersion (E-2) of the acid-modified polyolefin resin (A-2) was obtained by performing the same operations as in Reference Example 1 except that the acid-modified polyolefin resin (A-2) was used in place of the acid-modified polyolefin resin (A-1).

### Reference Example 3

### (Preparation of Acid-Modified Polyolefin Aqueous Dispersion (E-3))

The aqueous dispersion (E-3) of the acid-modified polyolefin resin (A-3) was obtained by performing the same operations as in Reference Example 1 except that the acid-modified polyolefin resin (A-3) was used in place of the acid-modified polyolefin resin (A-1).

The evaluation methods in the present invention are as follows.

### (1) Solvent Resistance

The aqueous dispersion for forming the resin layer was applied by a hand coating method to the biaxially stretched PET film (Emblet, thickness: 12 µm, manufactured by Unitika Ltd.). After the application, the applied aqueous dispersion was dried under the conditions of 140°C and 30 seconds. A hammer head having a weight of 2 pounds (907 g) was covered with a 16 ply gauze pad impregnated with ethanol, the gauze pad was fixed to the hammer head by fastening with rubber bands, the coating film surface was rubbed with the hammer covered with the gauze pad, in five back-and-forth movements, and then the state of the coating film surface was observed. In this case, no force was exerted in the vertical direction in such a way that only the weight of the hammer itself was the applied load.
Good: No change occurs.
Average: Whitening occurs.
Poor: Coating is exfoliated.

### (2) Blocking Resistance

Two sheets of the multilayer film cut out to 50 mm x 50 mm were superposed on each other in such a way that the resin layer surface of one sheet and the non-resin layer surface (substrate film surface) of the other sheet were brought into contact with each other, the superposed multilayer films were sandwiched between two sheets of stainless steel flat plates and placed on a flat plane, 10 kg of a weight was placed on the sandwiched multilayer films and the sandwiched multilayer films were allowed to stand still at 60°C for 24 hours or more, then the weight and the stainless steel plates were removed, and the adhesion state of the film surfaces was examined to perform the evaluation of the blocking resistance.
Good: No adhesion is found between the films.
Average: Films are easily detached.
Poor: Adhesion is found.

### (3) Adhesion Strength-1

By using a laminator equipped with an extruder, LDPE (L211, manufactured by Sumitomo Chemical Co., Ltd.) was melt extruded at 300°C on the resin layer surface of the multilayer film, to yield a laminate film having a heat seal layer formed of a 40-µm thick LDPE layer. From this laminate film, a 15-mm wide specimen was sampled, the specimen was peeled in the interface between the heat seal layer and the multilayer film layer from one end of the specimen on the basis of 180-degree peeling method, by using the tensile testing machine, Model AG-IS, manufactured by Shimadzu Corp., and thus the adhesion strength-1 was measured. The measurement was performed in the atmosphere of 23°C and 50% RH at a tensile rate of 300 mm/min. Practically, the adhesion strength-1 is preferably 400 g/15 mm or more.

### (4) Adhesion Strength-2

The resin layer surfaces of the multilayer films were made to face each other, and pressed at 140°C for 20 minutes by using a heat press machine (sealing pressure: 0.1 MPa/cm²) under the condition that a filler sheet formed of a 600-µm thick ethylene-vinyl acetate copolymer (SOLAR EVA SC50B, manufactured by Mitsui Chemicals Fabro, Inc.) for solar cell module was sandwiched between these resin layer surfaces, to yield a multilayer body having a structure composed of multilayer film/ethylene-vinyl acetate copolymer sheet/multilayer film. From this multilayer body, a 15-mm wide specimen was sampled, and allowed to stand for 1 day, and then, by using the tensile testing machine, Model AG-IS, manufactured by Shimadzu Corp., the multilayer film on one surface side of the specimen and the multilayer film on the other surface side of the specimen were subjected to T-type peeling, and thus the adhesion strength-2 was measured. The measurement was performed at 25°C at a tensile rate of 200 mm/min. Practically, the adhesion strength-2 is preferably 300 g/15 mm or more.

### (5) Content Resistance

The laminate film including a heat seal layer formed therein, prepared by the method described in foregoing (3) was pressed by using an impulse sealer (manufactured by Fuji Impulse Co., Ltd.) to prepare a packaging body (type of packaging body: pillow type, dimension: 80 mm x 150 mm, heat seal width: 10 mm). In this packaging body, a 20% ethanol aqueous solution was filled in an amount of 30 cc, the resulting package was stored for 30 days in an environment of 20°C and 65% RH, then a 15-mm wide specimen was sampled from the laminate film in contact with the 20% ethanol aqueous solution, the adhesion strength was measured by the method described in (3), and thus the content resistance was evaluated.

### Example 1

Individual components were mixed so as to result in the mixing ratio shown in Table 1, and thus an aqueous dispersion for forming the resin layer was prepared. The solid content concentration was regulated so as to be 11.7% by mass with pure water.

A polyethylene terephthalate resin (intrinsic viscosity: 0.6, manufactured by Nippon-Ester Co., Ltd.) was extruded into a sheet shape by using an extruder (diameter: 75 mm, L/D: 45, slow compression type, single screw) equipped with a T-die, at a cylinder temperature of 260°C and a T-die temperature of 280°C, and rapidly cooled by being allowed to be in close contact with a cooling roll set at a surface temperature of 25°C, to prepare a 120-µm thick unstretched film.

Successively, the unstretched film was longitudinally stretched at 90°C with a magnification of 3.4, then the longitudinally stretched film was introduced into a gravure roll type coater, the aqueous dispersion for forming the resin layer was applied to the longitudinally stretched film by combining a Meyer bar method in such a way that the thickness of the resin layer after the below-described transverse stretching was 0.2 µm, and the applied aqueous dispersion was dried. In this case, the corona treatment of the film was not performed before the application of the aqueous dispersion. Next, the longitudinally stretched film was preheated at a temperature of 90°C for 2 seconds, and then stretched in the transverse direction with a magnification of 3.5. The relaxation rate in the transverse direction was 2%. The thickness of the polyethylene terephthalate layer in the obtained multilayer film was 12 µm.

The evaluation results of the obtained multilayer film are shown in Table 1.

### Examples 2 to 20 and Comparative Examples 1 to 13

In each of Examples 2 to 20 and Comparative Examples 1 to 13, a multilayer film was obtained by performing the same operations as in Example 1 except that the types of the individual components and the mixing ratio in the aqueous dispersion for forming the resin layer were altered as shown in Table 1.

The evaluation results of the obtained multilayer films are shown in Table 1.

### Example 21

A nylon 6 resin (A1030BRF, intrinsic viscosity: 3.0, manufactured by Unitika Ltd.) was extruded into a sheet shape by using an extruder (diameter: 75 mm, L/D: 45, slow compression type, single screw) equipped with a T-die, at a cylinder temperature of 290°C and a T-die temperature of 240°C, and rapidly cooled by being allowed to be in close contact with a cooling roll set at a surface temperature of 20°C, to prepare a 100-µm thick unstretched film.

Successively, the unstretched film was longitudinally stretched at 56°C with a magnification of 3.0, then the longitudinally stretched film was introduced into a gravure roll type coater, the aqueous dispersion for forming the resin layer, prepared in the same manner as in Example 1, was applied to the longitudinally stretched film by combining a Meyer bar method in such a way that the thickness of the resin layer after the transverse stretching was 0.2 µm, and the applied aqueous dispersion was dried. In this case, the corona treatment of the film was not performed before the application of the aqueous dispersion. Next, the longitudinally stretched film was preheated at a temperature of 60°C for 2 seconds, and then stretched in the transverse direction with a magnification of 3.3. The relaxation rate in the transverse direction was 5.0%. The thickness of the nylon 6 layer in the obtained multilayer film was 12 µm.

The evaluation results of the obtained multilayer film are shown in Table 1.

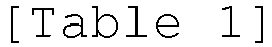

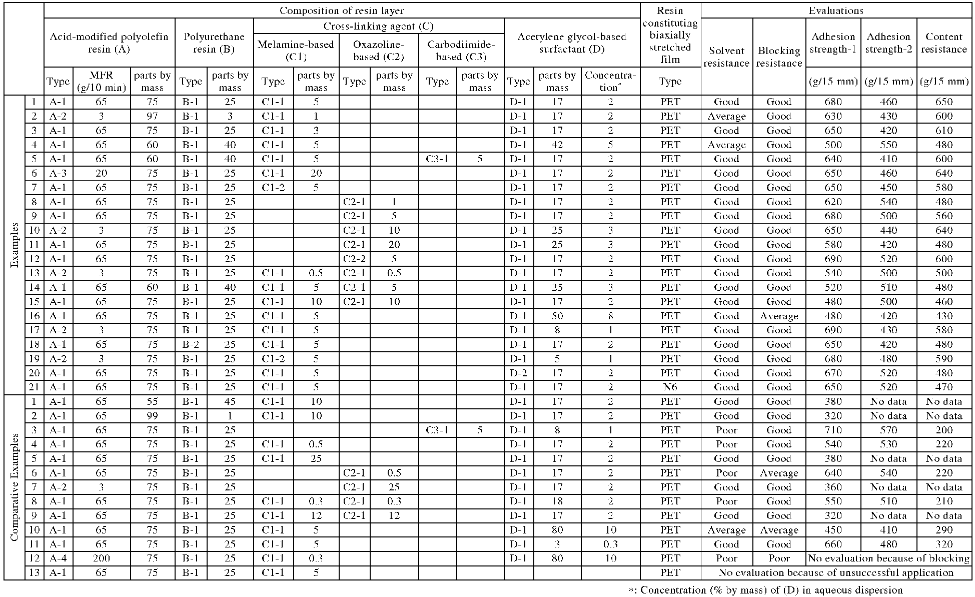

The multilayer films obtained in Examples were excellent in the solvent resistance, the blocking resistance, the adhesiveness with the heat sealing resin layer or the ethylene-vinyl acetate copolymer sheet for solar cell module, and the content resistance.

On the contrary, in Comparative Examples 1 and 2, the adhesiveness was poor because of the mass ratio between the acid-modified polyolefin resin (A) and the polyurethane resin (B) falling outside the range specified in the present invention. Comparative Example 3 was poor in solvent resistance and content resistance because of the use of the cross-linking agent other than those specified in the present invention; Comparative Examples 4, 6 and 8 were poor in solvent resistance and content resistance because of the content of the cross-linking agent (C) smaller than the range specified in the present invention; Comparative Examples 5, 7 and 9 were poor in adhesiveness because of the content of the cross-linking agent (C) larger than the range specified in the present invention. Comparative Examples 10 and 11 were poor in content resistance because of the content of the acetylene glycol-based surfactant (D) falling outside the range specified in the present invention. Comparative Example 12 was poor in blocking resistance because of the MFR value of the acid-modified polyolefin (A), the content of the cross-linking agent (C) and the content of the acetylene glycol-based surfactant (D) respectively falling outside the ranges specified in the present invention. Comparative Example 13 was poor in wettability and unable to form the resin layer because the aqueous dispersion for forming the resin layer did not contain the acetylene glycol-based surfactant (D), and no corona treatment was performed before the application of the aqueous dispersion.

## Claims

1. A multilayer film comprising a resin layer formed at least on one surface of a biaxially stretched film, the resin layer including an acid-modified polyolefin resin (A), a polyurethane resin (B), a cross-linking agent (C) and an acetylene glycol-based surfactant (D), wherein the cross-linking agent (C) includes a melamine-based cross-linking agent (C1) and/or an oxazoline-based cross-linking agent (C2); a mass ratio ((A)/(B)) between (A) and (B) is 60/40 to 97/3; and a total amount of (C1) and (C2) is 1 to 20 parts by mass, or an amount of (C1) as a single substance and an amount of (C2) as a single substance are each 1 to 20 parts by mass, and an amount of (D) is 5 to 50 parts by mass in relation to 100 parts by mass of a total amount of (A) and (B).

2. The multilayer film according to claim 1, wherein a melt flow rate (MFR) of the acid-modified polyolefin resin (A) at 190°C, under a load of 2160 g is 0.01 to 100 g/10 min.

3. The multilayer film according to claim 1 or 2, wherein an olefin-based resin layer is laminated on a surface of the resin layer.

4. An aqueous dispersion comprising the acid-modified polyolefin resin (A), the polyurethane resin (B), the cross-linking agent (C) and the acetylene glycol-based surfactant (D), wherein the cross-linking agent (C) includes the melamine-based cross-linking agent (C1) and/or the oxazoline-based cross-linking agent (C2); the mass ratio ((A)/(B)) between (A) and (B) is 60/40 to 97/3; the total amount of (C1) and (C2) is 1 to 20 parts by mass, or the amount of (C1) as a single substance and the amount of (C2) as a single substance are each 1 to 20 parts by mass, and the amount of (D) is 5 to 50 parts by mass in relation to 100 parts by mass of the total amount of (A) and (B); and a concentration of (D) in the aqueous dispersion is 1 to 5% by mass.

5. A method for producing the multilayer film according to claim 1 or 2, wherein the aqueous dispersion according to claim 4 is applied to at least one surface of the biaxially stretched film and dried.

6. The method for producing the multilayer film according to claim 1 or 2, wherein the aqueous dispersion according to claim 4 is applied to at least one surface of an unstretched film or a uniaxially stretched film, and then the unstretched film or the uniaxially stretched film is dried and stretched.
